# EUROPÄISCHE PATENTSCHRIFT

(11) **EP 1 900 313 B1**
(45) Veröffentlichungstag und Bekanntmachung des Hinweises auf die Patenterteilung: **12.05.2010**
(21) Anmeldenummer: 07116424.8
(22) Anmeldetag: 14.09.2007
(51) Int. Cl.: A47J 31/40, A47J 31/36

(54) **Brüheinheit für eine Kaffeemaschine sowie Kaffeemaschine mit einer solchen Brüheinheit**
Brewing unit for a coffee machine and coffee machine with such a brewing unit
Unité d'échaudage pour une machine à café ainsi que machine à café dotée d'une telle unité d'échaudage

(30) Priorität: 16.09.2006 DE 202006014206 U
(43) Veröffentlichungstag der Anmeldung: 19.03.2008
(73) Patentinhaber: WIK Far East Ltd., Hong Kong (CN)
(72) Erfinder: Meuer, Jens Martin, 47269 Duisburg (DE)
(74) Vertreter: Haverkamp, Jens

(56) Entgegenhaltungen:
- EP-A- 0 659 377
- DE-U1- 9 115 998

## Beschreibung

Die Erfindung betrifft eine Brüheinheit für eine Kaffeemaschine mit einem innerhalb eines Brühzylinders längsverschiebbar angeordneten und gegenüber einem Gestell bewegbaren Kolben mit einem Heißwasseraustritt zum Zuführen von Heißwasser in eine Brühkammer und mit einer an den bewegbaren Kolben angeschlossenen Heißwasserzuführung. Ferner betrifft die Erfindung eine Kaffeemaschine, die mit einer solchen Brüheinheit ausgerüstet ist.

Kaffeemaschinen, mit denen portionsweise, etwa tassenweise frisch gebrühter Kaffee bereitet werden kann, verfügen über eine Brüheinheit. Diese umfasst einen Brühzylinder, in den nach dem Starten eines Brühzyklus gemahlenes Kaffeepulver eingebracht, darin verdichtet und anschließend Heißwasser durchgeführt wird, bevor das ausgelaugte Kaffeemehl aus dem Brühzylinder ausgestoßen wird. Das in den Brühzylinder eingebrachte Kaffeepulver wird typischerweise in einem der Kaffeemaschine zugeordneten Mahlwerk aus Kaffeebohnen frisch gemahlen. Je nach Konzeption der Brüheinheit verfügt diese über zumindest zwei bewegliche Elemente, wobei es sich bei diesen um zwei gegeneinander bewegbare Kolben oder um einen Kolben und den Brühzylinder handeln kann. Es sind auch Brüheinheiten bekannt geworden, bei denen sowohl die beiden Kolben, als auch der Brühzylinder gegeneinander bewegbar sind. Typischerweise ist einer der beiden Kolben an eine Heißwasserzuführung angeschlossen und verfügt über einen Heißwasseraustritt, der zumeist hinter einer Siebplatte angeordnet ist. Derartige Brüheinheiten sind typischerweise aus der Kaffeemaschine herausnehmbar. Daher ist die der Brüheinheit zugeordnete Heißwasserzuführung an ein Kupplungsstück der Brüheinheit angeschlossen, welches bei in die Kaffeemaschine eingesetzter Brüheinheit mit einem der Kaffeemaschine zugeordneten komplementären Kupplungsstück verbunden ist. Ist der den Heißwasseraustritt ausweisende Kolben gegenüber dem das Kupplungsstück tragenden Gestell oder Rahmen bewegbar, muss die Heißwasserzuführung der Brüheinheit längenvariabel ausgestaltet sein.

In EP 0 659 377 B1 ist eine Brüheinheit beschrieben, bei der die Heißwasserzuführung durch ein Teleskoprohr realisiert ist. Eines der beiden Teleskoprohre ist gestellseitig und das andere am Kolben angeordnet. Die ineinander greifenden, die Heißwasserzuführung bildenden Rohre sind gegeneinander abgedichtet längsaxial bewegbar. Mit dieser Konzeption der Heißwasserzuführung kann zwar die Abstandsänderung des bewegbaren Kolbens von dem Heißwasserkupplungsstück kompensiert werden. Nachteilig ist bei der Konzeption jedoch, dass die beiden ineinander greifenden Rohrstücke abgedichtet gegeneinander bewegbar sein müssen. Zu berücksichtigen ist bei der Abdichtung der Druck, mit dem das Heißwasser durch die Heißwasserzuführung geleitet wird. Um die notwendige Dichtigkeit auch bei Drücken von 15 bar und mehr gewährleisten zu können, müssen die als O-Ringe ausgebildeten Dichtungen mit entsprechendem Anpressdruck an den Mantelflächen anliegen. Dieses hat zur Folge, dass der Antrieb zum Bewegen des Kolbens ausreichend leistungsstark vorgesehen sei muss, damit die aus der Dichtungsanordnung resultierende, einer Bewegung der beiden Teleskoprohre gegeneinander entgegenwirkende Reibung überwunden werden kann. Überdies sind die Dichtungen aufgrund der hohen Wassertemperatur und des Druckes einem erhöhten Verschleiß ausgesetzt.

Bei anderen Brüheinheiten ist zusammen mit dem beweglichen Kolben das Kupplungsstück der Heißwasserzuführung bewegbar. Bei diesen Brüheinheiten verfügt die der Brüheinheit zugeordnete Kaffeemaschine über eine flexible Heißwasserzuführleitung, beispielsweise einem Schlauch, der bei in die Kaffeemaschine eingesetzter Brüheinheit die im Rahmen eines Brühzyklusses stattfindende Bewegung des beweglichen Kolbens mitmacht. Als nachteilig wird bei einer solchen Ausgestaltung angesehen, dass ein Einsetzen der Brüheinheit in die Kaffeemaschine nur in einer bestimmten Stellung seiner beweglichen Komponenten möglich ist, damit eine bestimmungsgemäße Kontaktierung der beiden Kupplungsstücke der Heißwasserzuführung erfolgt.

Ausgehend von dem diskutierten Stand der Technik liegt der Erfindung daher die Aufgabe zugrunde, eine eingangs genannte Brüheinheit dergestalt weiterzubilden, dass eine Abstandsänderung des bewegbaren Kolbens gegenüber dem Gestell mit dem der Heißwasserzuführung zugeordneten Kupplungsstück möglich ist, ohne dass die zu dem vorstehend gewürdigten Stand der Technik genannten Nachteile in Kauf genommen werden müssen.

Diese Aufgabe wird erfindungsgemäß durch eine eingangs genannte, gattungsgemäße Brüheinheit gelöst, bei der dem bewegbaren Kolben ein Führungstubus zugeordnet ist, der auf oder in einem an einem Gestell angeordneten feststehenden Tubus teleskopartig verschiebbar ist, in welchen Tuben eine flexible Leitung unter Ausbildung eines Leitungsspeichers als Heißwasserzuführung angeordnet ist.

Diese Brüheinheit verfügt über eine flexible Leitung, vorzugsweise einen Schlauch zum Ausgleich der Abstandsänderungen zwischen dem den Heißwasseraustritt aufweisenden bewegbaren Kolben und dem ortsfest zu dem Kolben angeordneten Kupplungsstück der Heißwasserzuführung. Sämtliche bewegbaren Elemente sind somit der Brüheinheit zugeordnet. Die flexible Leitung ist innerhalb zweier nach Art eines Teleskops längsaxial verschiebbare Tuben angeordnet. Einer der beiden Tuben ist dem bewegbaren Kolben zugeordnet. Dieser Tubus ist im Rahmen dieser Ausführungen als Führungstubus bezeichnet. Der andere Tubus ist gestellseitig angeordnet und stellt den zu dem Führungstubus feststehenden Tubus dar. Durch diese Maßnahme ist nicht nur der bewegbare Kolben in besonders günstiger Weise geführt, sondern gleichzeitig ist auch die flexible Leitung geschützt. Diese Art der Führung des bewegbaren Kolbens hat ferner zum Vorteil, dass auf der äußeren Mantelfläche des Führungstubus das eine Ende des Brühzylinders geführt sein kann.

Die flexible Leitung ist in den beiden Tuben unter Ausbildung eines Leitungsspeichers, etwa einer Schlaufe angeordnet. Eine Längenänderung wird bei dieser Brüheinheit somit durch Verkleinern bzw. Vergrößern der Schlaufe kompensiert. Liegt die Leitung im Bereich des Leitungsspeichers an der Innenwand der beiden Tuben an, rollt die flexible Leitung an der Innenwand der beiden Tuben bei einer Bewegung des Kolbens ab. Allenfalls an der Innenwand eines der beiden Tuben erfolgt eine translatorische Bewegung der flexiblen Leitung. Eine Überwindung der diesbezüglichen Haftreibung ist ohne weiteres bereits mit geringer Kraft möglich.

Der im Rahmen dieser Ausführungen benutzte Begriff des Leitungsspeichers beschreibt eine Ausbildung bzw. Anordnung der flexiblen Leitung, damit mit dem den Leitungsspeicher definierende Abschnitt der flexiblen Leitung eine Abstands- bzw. Längenkompensation zwischen den die Leitung verbindenden Elementen stattfinden kann. Ein solcher Leitungsspeicher ist beispielsweise durch eine offene Schlaufe realisierbar, bei der die flexible Leitung zwei 180°-Bögen beschreibt. Möglich sind auch andere Schlauchkonfigurationen zum Ausbilden eines Leitungsspeichers, beispielsweise unter Verwendung eines 180°-Bogens sowie eine 90°-Bogens. Für den Fall, dass auf einen gleich bleibenden Leitungsquerschnitt nicht wert gelegt wird, können als Leitungsspeicher auch die Wellen eines Wellschlauches dienen.

Besonders bevorzugt ist eine Ausgestaltung, bei der die flexible Leitung an den Innenwänden beider Tuben bei einer Bewegung des Kolbens abrollen und eine translatorische Bewegung zwischen der Außenwand der flexiblen Leitung gegenüber der Innenwand eines der beiden Tuben nicht stattfindet. Dieses kann bei einer Brüheinheit, bei der der dem bewegbaren Kolben zugeordnete Führungstubus auf dem feststehenden Tubus angeordnet ist, dadurch erreicht werden, dass der Abschnitt der flexiblen Leitung im Bereich des Leitungsspeichers, etwa der Schlaufe sich einerseits an der Innenwandung des feststehenden Tubus und andererseits an einem dem Führungstubus zugeordneten und mit diesem bewegten Führungselement abstützt. Das Führungselement ist mit dem feststehenden Tubus verbunden, bzw. stellt einen Teil desselben dar und ist innenseitig bezüglich der inneren Mantelfläche des feststehenden Tubus angeordnet. Bei einer Bewegung des Kolbens und einer eintretenden Änderung des in dem Leitungsspeicher aufgenommenen Abschnittes der flexiblen Leitung rollt diese sodann auf dem mit dem Kolben bewegten Führungselement einerseits und andererseits an der Innenwand des feststehenden Tubus ab. Durch diese Maßnahme ist nicht nur eine zu überwindende Haftreibung des Schlauches an der Innenwand eines der beiden Tuben vermieden, sondern gleichzeitig eine mögliche Abnutzung der äußeren Mantelfläche des flexiblen Leitung.

Das Führungselement ist zweckmäßigerweise nach Art einer Schiene leistenförmig mit einer Längserstreckung, die parallel zur Bewegungsachse des bewegbaren Kolbens verläuft, ausgebildet. Das Führungselement kann, wenn gewünscht, durch zwei Seitenwände eingefasst sein. Hierbei kann es sich um durchgehende Wände oder auch um einzelne voneinander beanstandete Stege handeln. Durch diese erfährt zumindest ein Abschnitt der flexiblen Leitung, der in dem Leitungsspeicher aufgenommen ist, bei einer Längenänderung der Leitung eine gewisse Führung. Eine solche Führung kann auch dadurch erreicht werden, dass das leistenförmige Führungselement konkav gekrümmt ist, so dass durch diese Krümmung eine Aufnahme für einen Abschnitt der flexiblen Leitung gebildet ist.

Nachfolgend ist die Erfindung anhand eines Ausführungsbeispiels unter Bezugnahme auf die beigefügten Figuren beschrieben. Es zeigen:
- **Fig. 1:**: einen Längsschnitt durch eine Brüheinheit für eine Kaffeemaschine in einer ersten Stellung seiner beweglichen Elemente,
- **Fig. 2:**: einen Querschnitt durch die Brüheinheit entlang der Linie A - B der Figur 1 und
- **Fig. 3:**: eine Längsschnittdarstellung entsprechend Figur 1 in einer anderen Position der bewegbaren Elemente der Brüheinheit zueinander.

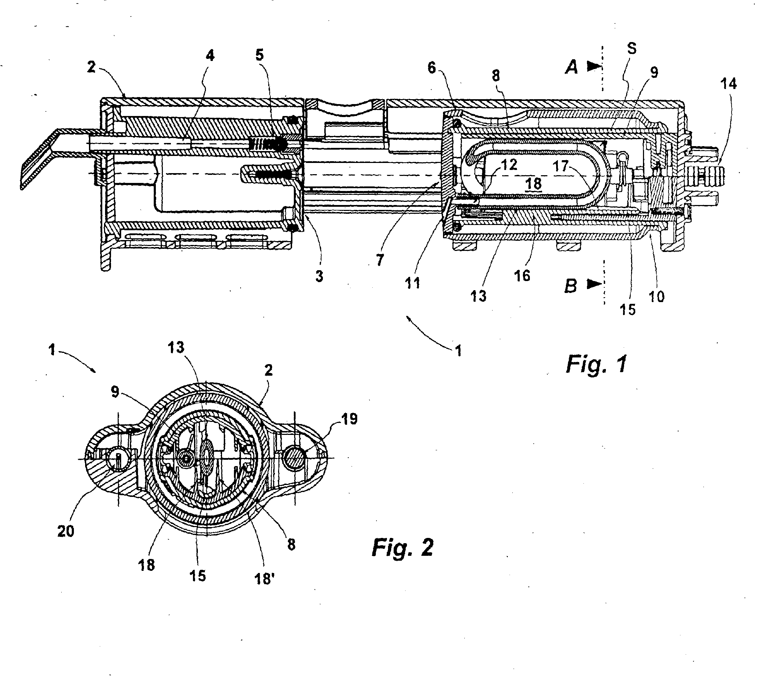

Eine Brüheinheit 1 für eine Kaffeemaschine verfügt über ein Gestell 2. Das Gestell 2 ist nach Art eines Gehäuses ausgebildet. An das Gestell 2 angeschlossen ist ein feststehender Kolben 3 mit einer Kaffeeauslaufleitung 4. In die Kaffeeauslaufleitung 4 ist ein Crema-Ventil 5 eingeschaltet. Teil der Brüheinheit 1 ist des Weiteren ein Brühzylinder 6. Der Brühzylinder 6 ist durch einen Spindelantrieb in längsaxialer Richtung bewegbar angetrieben. In dem Brühzylinder 6 ist ein beweglicher Kolben 7 angeordnet, der durch den Brühzylinder 6 ebenfalls in längsaxialer Richtung bewegbar ist. Figur 1 zeigt den Brühzylinder 6 und den bewegbaren Kolben 7 in ihrer Ausgangsstellung zu Beginn eines Brühzyklusses.

Ein Führungstubus 8, der an die Rückseite des bewegbaren Kolbens 7 angeschlossen ist, bildet zusammen mit diesem eine gegenständliche Einheit. Der Führungstubus 8 ist verschiebbar auf einem feststehenden Tubus 9 geführt. Der feststehende Tubus 9 ist mit seinem rückwärtigen Ende gestellseitig festgelegt. Die Außenseite des Führungstubus 8 dient dem verkröpften rückwärtigen Endabschnitt 10 des Brühzylinders 6 als Führung. Der Führungstubus 8 ist gegenüber dem feststehenden Tubus 9 teleskopartig bewegbar. Der Durchmesser der beiden Tuben 8, 9 ist möglichst groß gewählt. Hierdurch ist die Führung des Führungstubusses 8 auf dem feststehenden Tubus 9 verbessert. Gleichzeitig erhält man hierdurch einen großvolumigen Innenraum.

Der bewegliche Kolben 7 verfügt über einen Heißwasseraustritt 11, dessen Mündung zu dem feststehenden Kolben 3 weist. An die Rückseite des beweglichen Kolbens 7 ist ein Schlauchanschluss 12 angeformt. Auf diesem sitzt ein Schlauch 13 als flexible Leitung einer Heißwasserzuführung. Der Schlauchanschluss 12 sowie der Schlauch 13 befinden sich innerhalb des Führungstubusses 8 sowie auch innerhalb des von dem feststehenden Tubus 9 eingeschlossenen Raumes. Der Schlauch 13 ist mit seinem anderen Ende an ein gestellseitig gehaltenes Kupplungsstück 14, gegebenenfalls unter Zwischenschaltung weiterer Elemente, beispielsweise eines Einlassventils angeschlossen. Das Kupplungsstück 14 dient zum Anschließen der Heißwasserzuführung der Brüheinheit 1 an die Heißwasserversorgung einer Kaffeemaschine. Innerhalb der beiden Tuben 8, 9 ist der Schlauch 13 unter Ausbildung einer Schlaufe S als Leitungsspeicher angeordnet.

Teil des Führungstubusses 8 ist ein leistenförmiges Führungselement 15, das durch einen Steg 16 mit dem eigentlichen Führungstubus 8 verbunden ist. Das Führungselement 15 befindet sich innenseitig zur inneren Mantelfläche des feststehenden Tubus 8. Der feststehende Tubus 9 weist einen Schlitz auf, in den der Steg 16 in der in Figur 1 gezeigten Stellung des bewegbaren Kolbens 7 in den feststehenden Tubus 9 eingreift. Das Führungselement 15 ist in Querrichtung konkav gekrümmt, wobei durch diese Krümmung eine Aufnahme 17 für den Schlauch 13 gebildet ist. Die Schlaufe S liegt somit bei dem dargestellten Ausführungsbeispiel in der Darstellung der Figur 1 einerseits an der Innenwand des feststehenden Tubus 9 (unten) und andererseits auf den Führungselement 15 des Führungstubusses 8 (oben) an. Zur weiteren Führung des Schlauches 13 bei einer Bewegung des Kolbens 7 dienen zwei dem feststehenden Tubus 9 zugeordnete Seitenwände 18, 18', von denen in Figur 1 lediglich die Seitenwand 18 erkennbar ist. Durch die Seitenwände 18, 18' ist das Führungselement 15 seitlich eingefasst und zwischen diesen in axialer Richtung mit der Bewegung des Kolbens 7 verschiebbar.

Der in Figur 2 gezeigte Querschnitt der Brüheinheit 1 zeigt die Ausbildung des Führungselementes 15 sowie die Einfassung desselben durch die Seitenwände 18, 18'. Die Antriebsspindel zum Antreiben des Brühzylinders 6 ist in Figur 2 durch das Bezugszeichen 19 kenntlich gemacht. Der Antriebsspindel gegenüberliegend verfügt die Brüheinheit 1 über eine Führungsstange, auf der die Brüheinheit 6 neben der Antriebsspindel 20 in axialer Richtung verschiebbar gelagert ist.

Zum Brühen eines Kaffeegetränkes wird der Brühzylinder 6 in längsaxialer Richtung auf den feststehenden Kolben 3 hinbewegt, bis dass dieser in den Brühzylinder 6 eintritt. Nach Einbringen von gemahlenem Kaffeepulver wird der Brühzylinder 6 weiter in Richtung auf den feststehenden Kolben 3 bewegt, bis der Endabschnitt 10 den beweglichen Kolben 7 mitnimmt und diesen ebenfalls in Richtung auf den feststehenden Kolben 3 bewegt. Die eigentliche Brühkammer, in der das in den Brühzylinder 6 eingebrachte Kaffeepulver aufgebrüht wird, wird somit durch einen Abschnitt des Brühzylinders 6, den feststehenden Kolben 3 und den beweglichen Kolben 7 gebildet. Bei einer Bewegung des beweglichen Kolbens 7 in Richtung zum feststehenden Kolben 3 wird die Länge der als Leitungsspeicher dienenden Schlaufe S verkleinert, damit die durch den Schlauch 13 gebildete Heißwasserzuführung die Längenänderung mitmachen kann. Bei dieser Bewegung rollt der Schlauch 13 von der inneren Mantelfläche des feststehenden Tubus 9 ab und auf die Oberseite des Führungselementes 15 auf. Eine Reibung zwischen dem Schlauch 13 und den beiden Tuben 8, 9 braucht bei einer Bewegung des beweglichen Kolbens 4 gegenüber dem Gestell 2 nicht überwunden zu werden.

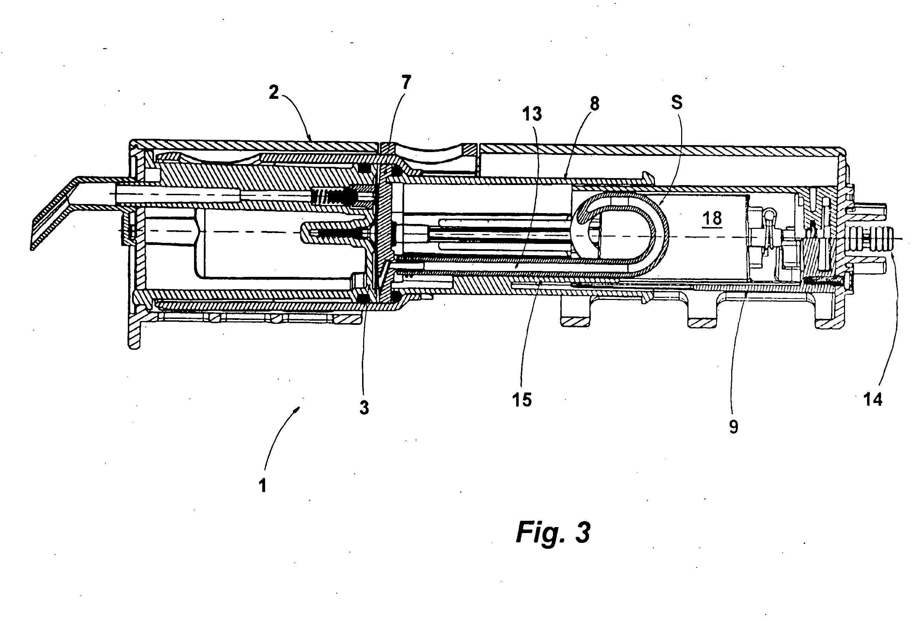

Figur 3 zeigt eine Stellung des Brühzylinders 6 sowie des beweglichen Kolbens 7 der Brüheinheit 1 in ihrer an den feststehenden Kolben 3 anschlagenden Stellung. In dieser Figur befindet sich kein Kaffeemehl zwischen den beiden Kolben 3, 7, so dass diese aneinander anstoßen. Im Falle des Brühens eines Kaffeegetränkes befindet sich zwischen den beiden Kolben 3, 7 gemahlenes Kaffeepulver.

Wird nach Brühen des gewünschten Kaffeegetränkes der bewegliche Kolben 7 aus seiner Brühstellung in seine in Figur 1 gezeigte Ausgangsstellung zurückgefahren, vergrößert sich die Länge der Schlaufe S zum Speichern des für die Längenkompensation benötigten Schlauchlänge wieder, wobei bei dieser Bewegung der Schlauch 13 von dem Führungselement 15 abrollt und an der inneren Mantelfläche des feststehenden Tubus 9 anrollt. Die Seitenwände 18, 18' dienen allein zur Vermeidung eines Schlauchknickens. In Querrichtung zur Bewegungsrichtung des bewegbaren Kolbens 7. An den Seitenwänden 18, 18' liegt der Schlauch 13 allenfalls ohne Vorspannung an.

Die beschriebene Brüheinheit ist als Ganzes ohne weiteres aus einer in den Figuren nicht näher dargestellten Kaffeemaschine herausnehmbar. Die Kaffeemaschine verfügt zu diesem Zweck über einen entsprechenden Schacht, an dessen hinterem Ende das komplementäre Kupplungsstück für die Heißwasserzuführung angeordnet ist. Versetzt zu diesem Kupplungsstück befindet sich in der Flucht der Antriebsspindel ein Kupplungsstück zum drehmomentschlüssigen Anschließen der Antriebsspindel.

Die Führung des bewegbaren Kolbens 7 erfolgt bei dem dargestellten Ausführungsbeispiel durch die teleskopartige Bewegbarkeit des Führungstubusses 8 gegenüber dem feststehenden Tubus 9. Bei diesen Elementen 8, 9 muss es sich nicht notwendigerweise um geschlossene, ringförmige Elemente handeln. Daher ist unter dem Begriff "Führungstubus" bzw. "feststehender Tubus" jedwede Führung zu verstehen, die eine teleskopartige Bewegbarkeit und Führung des bewegbaren Kolbens gegenüber dem Gestell gestattet. In dem dargestellten Ausführungsbeispiel ist die Führung des bewegbaren Kolbens anhand zweier miteinander in Eingriff stehender Tuben dargestellt worden. Eine Führung des bewegbaren Kolbens kann ebenfalls über mehrere, teleskopartig ineinander eingreifende Tuben verwirklicht sein.

### Bezugszeichenliste

- 1: Brüheinheit
- 2: Gestell
- 3: feststehender Kolben
- 4: Kaffeeauslaufleitung
- 5: Crema-Ventil
- 6: Brühzylinder
- 7: beweglicher Kolben
- 8: Führungstubus
- 9: feststehender Tubus
- 10: Endabschnitt
- 11: Heißwasseraustritt
- 12: Schlauchanschluss
- 13: Schlauch
- 14: Kupplungsstück
- 15: Führungselement
- 16: Steg
- 17: Aufnahme
- 18, 18': Seitenwand
- 19: Antriebsspindel
- 20: Führungsstange

- S: Schlaufe

## Patentansprüche

1. Brüheinheit für eine Kaffeemaschine mit einem innerhalb eines Brühzylinders (6) längsverschiebbar angeordneten und gegenüber einem Gestell (2) bewegbaren Kolben (7) mit einem Heißwasseraustritt (11) zum Zuführen von Heißwasser in eine Brühkammer und mit einer an den bewegbaren Kolben (7) angeschlossenen Heißwasserzuführung, **dadurch gekennzeichnet, dass** dem bewegbaren Kolben (7) ein Führungstubus (8) zugeordnet ist, der auf oder in einem an einem Gestell (2) angeordneten feststehenden Tubus (9) teleskopartig verschiebbar ist, in welchen Tuben (8, 9) eine flexible Leitung (13) unter Ausbildung eines Leitungsspeichers (S) als Heißwasserzuführung angeordnet ist.

2. Brüheinheit nach Anspruch 1, **dadurch gekennzeichnet, dass** die flexible Leitung (13) innerhalb des den Leitungsspeicher (S) bildenden Abschnittes einerseits an der Innenwand des feststehenden Tubus oder des gegenüber diesem bewegten Führungstubus und andererseits an einem dem anderen Tubus - Führungstubus (8) oder feststehender Tubus - zugeordneten und mit diesem verbundenen Führungselement (15) anliegt.

3. Brüheinheit nach Anspruch 2, **dadurch gekennzeichnet, dass** das Führungselement (15) nach Art einer Schiene leistenförmig ausgebildet ist und durch einen Steg (16) mit dem ihm zugeordneten Tubus (8) verbunden ist und der andere Tubus (9) einen Schlitz zur Aufnahme des Steges aufweist.

4. Brüheinheit nach Anspruch 2 oder 3, **dadurch gekennzeichnet, dass** das Führungselement (15) zumindest bereichsweise eine sich in Bewegungsrichtung des dem Kolben (7) zugeordneten Tubus (8) erstreckende Aufnahme (17) aufweist.

5. Brüheinheit nach einem der Ansprüche 1 bis 4, **dadurch gekennzeichnet, dass** der Führungstubus (8) auf dem feststehenden Tubus (9) geführt ist.

6. Brüheinheit nach einem der Ansprüche 1 bis 5, **dadurch gekennzeichnet, dass** das Gestell (2) ein Kupplungsstück (14) zum Anschließen der Heißwasserzuführung der Brüheinheit (1) an ein komplementäres Kupplungsstück einer Kaffeemaschine aufweist.

7. Brüheinheit nach einem der Ansprüche 1 bis 6, **dadurch gekennzeichnet, dass** der Leitungsspeicher durch eine Schlaufe (S) der flexiblen Leitung (13) gebildet ist.

8. Kaffeemaschine mit einer aus dieser herausnehmbaren Brüheinheit, **dadurch gekennzeichnet, dass** die Brüheinheit (1) nach einem der vorstehenden Ansprüche ausgebildet ist.

## Claims

1. Brewing unit for a coffee machine with a piston (7), which is located so as to be longitudinally displaceable within a brewing cylinder (6) and moveable in relation to a framework (2) with a hot water outlet (11) for supplying hot water into a brewing chamber and with a hot water supplying means connected to the moveable piston (7), **characterized in that** the moveable piston (7) has associated therewith a guiding tube (8), which is displaceable in a telescopic manner on or in a stationary tube (9) that is located on a framework (2), in which tubes (8, 9) is located a flexible line (13) forming a line storage means (S) as the hot water supplying means.

2. Brewing unit according to Claim 1, **characterized in that** within the section forming the line storage means (S), the flexible line (13), on the one hand, abuts against the inside wall of the stationary tube or of the guide tube that is moved in relation to said stationary tube and, on the other hand, against a guide element (15) which is associated with the other tube - guide tube (8) or stationary tube - and is connected to the same.

3. Brewing unit according to Claim 2, **characterized in that** the guide element (15) is realized in the shape of a strip in the manner of a rail and is connected to the tube (8) associated therewith by means of a web (16) and the other tube (9) has a slot for accommodating the web.

4. Brewing unit according to Claim 2 or 3, **characterized in that** the guide element (15) at least in a regional manner has an accommodating means (17) extending in the direction of movement of the tube (8) associated with the piston (7).

5. Brewing unit according to one of Claims 1 to 4, **characterized in that** the guiding tube (8) is guided on the stationary tube (9).

6. Brewing unit according to one of Claims 1 to 5, **characterized in that** the framework (2) has a coupling piece (14) for connecting the hot water supplying means of the brewing unit (1) to a complementary coupling piece of a coffee machine.

7. Brewing unit according to one of Claims 1 to 6, **characterized in that** the line storage means is formed by a loop (S) in the flexible line (13).

8. Coffee machine with a brewing unit that is removable therefrom, **characterised in that** the brewing unit (1) is realized in accordance with one of the preceding claims.

## Revendications

1. Unité d'échaudage pour une machine à café comportant un piston (7) mobile par rapport à un châssis (2) et disposé de manière à être déplaçable longitudinalement à l'intérieur d'un cylindre d'échaudage (6), avec une sortie d'eau chaude (11) destinée à acheminer de l'eau chaude vers une chambre d'infusion et comportant une alimentation d'eau chaude raccordée au piston (7) mobile **caractérisée en ce qu'**au piston (7) mobile est affecté un tube de guidage (8) qui est disposé de manière déplaçable téléscopiquement sur ou dans un tube (9) fixe placé disposé sur un châssis (2) fixe, dans lesquels tubes (8, 9) un flexible (13) formant une réserve de flexible (S) est disposé en guise d'alimentation d'eau chaude.

2. Unité d'échaudage selon la revendication 1 **caractérisée en ce que** le flexible (13) à l'intérieur du tronçon formant une réserve de flexible (S) est en appui d'une part contre la paroi intérieure du tube fixe ou du tube de guidage mobile par rapport au précédent et d'autre part contre un élément de guidage (15) affecté à l'autre tube - tube de guidage (8) ou tube fixe - et relié à ce dernier.

3. Unité d'échaudage selon la revendication 2 **caractérisée en ce que** l'élément de guidage (15) est conformé en baguettes, à la manière d'un rail et est relié par une traverse (16) avec le tube (8) qui lui est affecté et que l'autre tube (9) présente une fente destinée à recevoir la traverse.

4. Unité d'échaudage selon la revendication 2 ou 3 **caractérisée en ce que** l'élément de guidage (15) présente au moins sur certains tronçons un logement (17) s'étendant dans le sens du déplacement du tube (8) affecté au piston (7).

5. Unité d'échaudage selon l'une des revendications 1 à 4 **caractérisée en ce que** le tube de guidage (8) est guidé sur le tube (9) fixe.

6. Unité d'échaudage selon l'une des revendications 1 à 5 **caractérisée en ce que** le châssis (2) comporte une pièce de couplage (14) destinée à raccorder l'alimentation d'eau chaude de l'unité d'échaudage (1) à une pièce de couplage complémentaire d'une machine à café.

7. Unité d'échaudage selon l'une des revendications 1 à 6 **caractérisée en ce que** la réserve de flexible est conformée par une boucle (S) du flexible (13).

8. Machine à café comportant une unité d'échaudage qui peut être retirée de cette dernière **caractérisée en ce que** l'unité d'échaudage (1) est conformée selon l'une des revendications précédentes.
